# EUROPEAN PATENT APPLICATION

(11) **EP 2 218 325 A2**
(43) Date of publication of application: **18.08.2010**
(21) Application number: 10153320.6
(22) Date of filing: 11.02.2010
(51) Int. Cl.: A01G 9/14

(54) **Installing a panel in a building structure**

(30) Priority: 11.02.2009 NL 2002520
(71) Applicant: VerVoor Patent B.V., 2665 JE Bleiswijk (NL)
(72) Inventor: Verbakel, Hendrikus Joseph Petrus, 2665 TT, Bleiswijk (NL); Voorwinden, Abraham, 2651 LG, Berkel en Rodenrijs (NL); van der Ven, Wilhelmus Jacobus, 2676 DZ, Maasdijk (NL)
(74) Representative: Ketelaars, Maarten F.J.M.

(57) **Abstract**

Method and device for installing a panel (8) and a building structure (1) provided with a panel. The invention relates in particular to installing a glass pane in a roof structure of a greenhouse. It is proposed to provide the window (4,5,6) into which the panel (8) is to be fitted on at least three sides with framing sections (11,15,25) which are displaceable between a receiving position in which the window can move freely along the latter and a fitted position. The framing sections are brought to the fitted position by folding them over. This can be effected by means of a hinge action, deforming action or the like.

## Description

The present invention relates to a method for installing a panel in a greenhouse structure, comprising providing a window accommodating the glass panel, installing the panel in said window and fitting a framing covering the edge of said panel according to the preamble of Claim 1.

Such a method is generally known in the prior art and is used, for example, when fitting window panes in a greenhouse structure. In the prior art, these window panes are fitted from the inside using a special lift structure which rests on the bottom of the greenhouse. Since this installation method has a great number of drawbacks, due to the variable quality of the soil and other building processes which are taking place simultaneously, proposals have been made to fit the glass panels from the outside. This is particularly interesting in the case of glass panels of increasingly large dimensions. Due to the increased weight, it becomes increasingly difficult to handle the panels and more and more often the installation has to be carried out using mechanical means and the space for fitting glass panels from below is insufficient.

After the panel has been fitted in a frame structure intended therefor, the panel has to be secured in a watertight manner. This requires additional working steps which, in the prior art, include the manual installation of various kinds of mouldings to bars, gutter and ridge profile. Whereas remote-controlled positioning of the glass panel in the window can be automated to a significant degree, sealingly securing the panel with respect to the window is still carried out by hand, which leads to all the costs and inconvenience associated therewith.

BE 1005690 A3 discloses a structure in which, after a window has been fitted against a bar or the like, this window is secured/sealed by means of a profiled section which can be turned over, is attached to the window and can be locked thereto.

It is an object of the present invention to further optimize the process of installing panels. In the above-described method, this object is achieved by the features according to Claim 1.

According to the present invention, it is no longer necessary to use separate profiled sections for the bars, ridge or gutter in order to secure and/or frame the fitted panel. The framing sections according to the invention are already present before the panel is fitted. Therefore, no additional operation is required to attach these framing sections to the bars, ridge or gutter. As a result thereof, the logistics can be significantly simplified. According to the present invention, the framing sections which are already present are folded over after the glass panel has been fitted, so that they are moved from a receiving position for the glass panel to a fitted position in which the glass panel is sealingly secured. This simple operation may comprise any conceivable action, depending on the design of the framing section.

The first option to be mentioned is bending over. This means, starting from the receiving position, the framing sections are pushed down, for example by rollers, and are subjected to a non-reversible displacement in the process. This non-reversible displacement can, for example, be effected by plastic deformation of the material. It is also possible to use locking systems or to embody the framing sections to be bistable, so that these are only stable in the receiving position and in the fitted position. In any case, a simple operation suffices after the window pane has been fitted in the desired position to produce a sealing fit with respect to the window. This operation may be carried out completely or partly automatically. Thus, it is no longer necessary for workers to work on the outside, directly on the roof surface of the greenhouse. The device by means of which the panels are fitted to the frame of the building structure can also be used to arrange the framing sections in the fitted position. Depending on the degree of automation, it is obviously possible for a number of these steps still to be carried out by hand.

By means of the present invention, it is possible to very quickly render large surface areas windproof and watertight. Work can be carried out by only a few workers, while handling of the glass panels takes place by mechanical means as much as possible.

The above-described method is preferably used in greenhouses. However, it should be understood that it can also be used with any other building structure which is fitted with panels which may or may not be translucent and which may or may not be made of glass.

In the case of a rectangular panel, it is in principle only necessary for three of the four sides to be embodied in the above-described manner. This means that one of the sides is embodied in such a manner that the respective framing section is already in the end position and the panel is pushed into the latter in a sealing manner. As a result of the flexible sealing, a further pushing/tilting movement is carried out, in which the glass panel comes to lie in the fitted position and the three other sides are brought to the desired position by folding over the framing sections.

According to a particular embodiment of the invention, the side where no folding over occurs is preferably the side which is situated near the gutter.

The choice of material depends on the embodiment of the framing. If the latter, for example, forms a single part with the ridge profile or the bars, these are preferably made from the same (aluminium) material, in which, for example, a line of weakening may be provided in order to facilitate folding over. Of course, it is also possible to fit other structures, for example by gluing, screwing or fastening them in another manner, to the ridge or bar by means of which the folding movement of the framing can be realized. In this case, the material can be selected freely and it is possible to use, for example, plastic. According to a particular embodiment of the invention, the folding strip is provided with a sealing edge which acts on the glass panel to be secured.

The present invention also relates to a building structure comprising a frame which comprises a number of windows, in which one of said windows is provided with a translucent panel, in which said window is provided with a framing which secures the panel in the window, which framing comprises framing sections, in which a framing section is fixedly connected to said window and, in said fixedly connected position, can be displaced between a receiving position, in which said panel can be displaced along said framing section without causing damage, and a securing position in which said panel is clamped against said window, said framing section comprising a connecting part which is connected to the window, an engagement part which is hingedly connected to said connecting part, which engagement part is connected on its other side to a prestressing part.

By using parts connected to one another by different hinges, it is possible to push the engagement part against the fitted (glass) panel, preferably in a sealing manner, by simply pressing the prestressing part. This operation can be carried out very quickly and, if desired, in a completely automated fashion. According to a particular embodiment of this structure, an auxiliary part is provided between the prestressing part and the engagement part which is also hingedly fitted with respect to the prestressing part and engagement part. It is possible to lock either this auxiliary part or the prestressing part, or both. The prestressing part is then preferably locked by means of a locking recess which is provided in the connecting part, while the auxiliary part can be interlocked with the engagement part. Thus, a strong fixed connection is achieved which has a particularly long operational life.

The invention also relates to a device for installing a panel in a window, comprising a wheeled arch-shaped frame, which frame is provided with engagement means for a panel, which engagement means are connected to the frame via installation means, in which said installation means comprise a number of linearly acting actuators, in which a control unit is present for operating said actuators for handling said panel, in which said control unit is embodied in such a manner that a panel is, after engagement, brought from a transport position to an installation position, which installation position comprises tiltably fitting the respective side of the panel against one side of the window, to a fitted position, in which the displacement from the installation position to the fitted position comprises only a tilting movement.

The invention will be explained below with reference to the exemplary embodiments illustrated in the drawing, in which:
Fig. 1 diagrammatically shows a greenhouse structure according to the invention;
Fig. 2 diagrammatically shows the first step of fitting a window pane in a greenhouse structure;
Fig. 3 shows the second step of fitting a window pane;
Fig. 4 diagrammatically shows the enclosing of a window pane;
Figs. 5a-b show an example of a ridge structure provided with the framing sections according to the invention;
Figs. 6a-b show an example of a bar provided with the framing sections according to the invention;
Figs. 7a-b show an alternative for a framing section for a bar;
Fig. 8 shows a further variant of the invention;
Figs. 9a, 9b show a different embodiment of the invention;
Fig. 10 shows a device for fitting panels; and
Fig. 11 diagrammatically shows a detail of the way in which the panels are supplied.

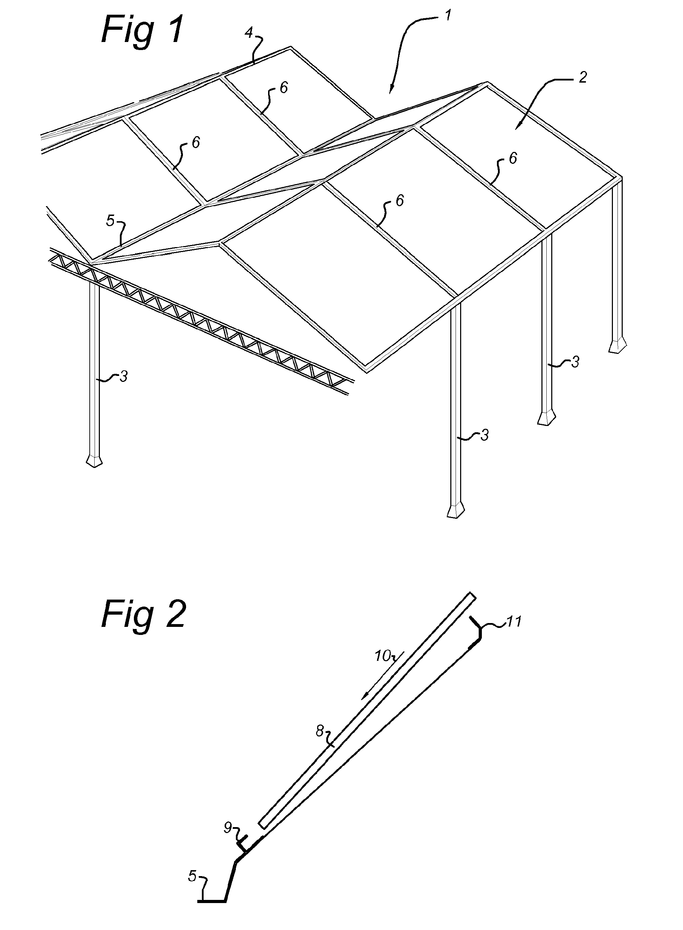

In Fig. 1, a greenhouse is denoted overall by reference numeral 1. It is provided with a number of roofs 2 supported by columns 3. Each roof has a ridge and is delimited on both sides by a gutter 5. Bars 6 are provided and a glass panel 8 is to be fitted between ridge 4, gutter 5 and two adjacent bars 6.

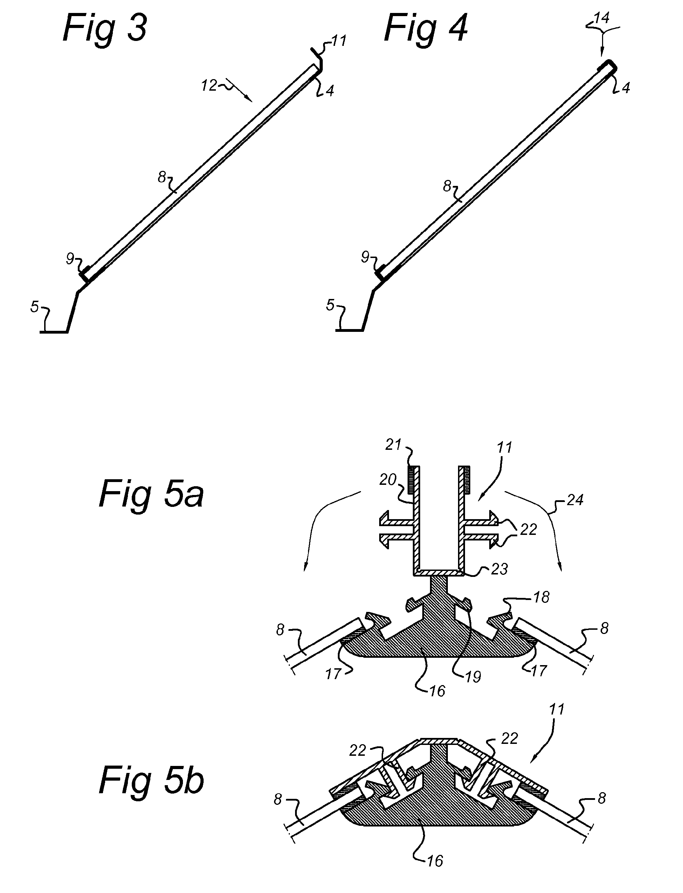

According to the present invention, such a panel is fitted from the outside. In a manner which is not shown in more detail, a panel 8 is fitted from the outside. The bars 6 and ridge 4 are embodied in a manner to be described below such that a glass panel can freely move along them and it is not until the glass panel has been installed in the desired position with respect to the bars 6 and ridge 4 that the sealing is effected. This does not apply to the profiled section which extends near the gutter 5 and is denoted by reference numeral 9. Profiled section 9 is provided with a U-shaped seal and the glass panel is moved into the profiled section 9 in the direction of arrow 10. This is shown in Fig. 2. Subsequently, a small tilting movement (of a few degrees) in the direction of arrow 12, as illustrated in Fig. 3, takes place. In this position, the glass panel 8 is in the desired position with respect to the roof structure. As is illustrated, the ridge 4 comprises an extended part 11. After the glass panel 8 has been fitted, as illustrated in Fig. 3, this part 11 is folded over in the direction of arrow 14 and the panel is sealingly secured, as is shown in Fig. 4. Framing section or seal 11 provides secure sealing of the glass panel 8. A corresponding structure is provided at the bars. As a result thereof, the glass panel can be fixed on all sides in a simple manner, once it has been fitted, as is illustrated in Fig. 3. Such a folding movement of the framing section 11 and the corresponding framing sections near the bars can be carried out by a simple operation and does not require the framing sections to be fitted in a separate operation because these are already present before the panel 8 is installed.

The framing section 11 can be embodied in many different ways and some examples thereof are illustrated in Figs. 5-7.

Fig. 5 shows a ridge structure in which the framing section 11 is provided in duplicate and connected to the upper side of the ridge profile. This connection is a fixed connection and can also be brought about by screwing, gluing or (co)extrusion. The material used for the framing section 11 can be chosen depending on the method of fastening. Each framing section of the seal 11 is denoted by reference numeral 20. Fig. 5a shows that the framing section 11 is provided with a line of weakening 23, two locking lips 22 and sealing strips 21.

Fig. 5a shows the delivery position of the ridge profile 4. After the frame structure of the greenhouse has been erected, the panel 8 is fitted and Fig. 5a shows the position which corresponds to the principle illustrated in Fig. 3, the fitted position. Starting from this position, each of the sealing strips 20 is folded over in the direction of arrow 24, which corresponds to the direction of arrow 14 in the previous figures. As a result of the line of weakening 23, local deformation occurs and when the sealing strip 20 is pushed down, the locking lips 22 are locked behind the locking edges 18 and 19 provided in the ridge profile 16 and the locking projections can snap into the locking chamber provided underneath. This results in the position illustrated in Fig. 5b. In this position, the panel 8 is secured and due to the combination of locking lips 22 and plastic deformation at the line of weakening 23, part 20 can no longer move back. Due to the presence of the locking lips, it is possible to prevent a spring action in the sense of the sealing strip 20 opening by elastic deformation. By using certain materials, it is, however, also possible to omit the locking lips, with deformation at the location of the line of weakening 23 being sufficient to ensure reliable locking.

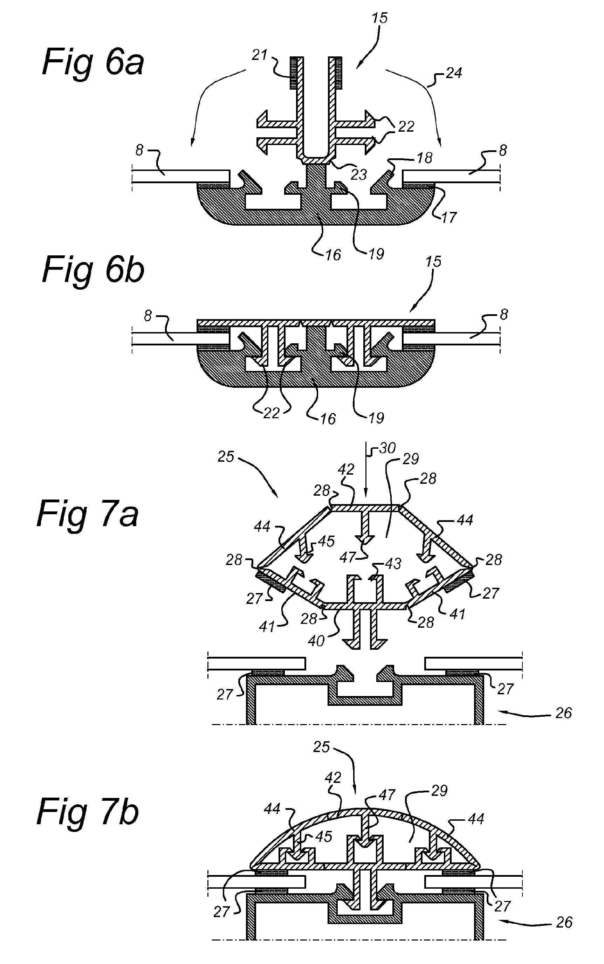

The structure described in Figs. 5a-b with reference to a ridge profile is used in substantially the same way for the two adjacent bars. This is shown in Figs. 6a-b in which the folding sealing strip is denoted by reference numeral 15.

Fig. 7 shows a variant of the securing system of the framing sections in a highly diagrammatical way. The sealing strip consists of a part 25 which comprises a number of parts which are connected to each other by hinges 28, some of these parts having been provided with a seal 27. These parts are a connecting part 40 which can be connected to the profiled section 26 or forms an integral part thereof. Hingedly connected thereto by hinge 28 is an engagement part 41 which is provided with the aforementioned seal 27. Hingedly connected thereto is an auxiliary part 44 which is in turn hingedly connected to the prestressing part 42. In the version illustrated in Fig. 7, a panel can be secured on both sides, so that part 25 is embodied symmetrically. The prestressing part 42 is provided with a latch 47 which can cooperate with a locking recess 43 in the connecting part 40. A similar latch 45 may be present on the auxiliary part which cooperates with a recess which is provided on the engagement part 41. By exerting pressure in the direction of arrow 30, the transformation of the situation illustrated in Fig. 7a to that illustrated in Fig. 7b is effected.

### If desired, a lock may be present to fix the position illustrated in Fig. 7b.

After Figs. 5-7, it will be understood that numerous variants are possible to arrive at a fitted position of the framing sections from a receiving position.

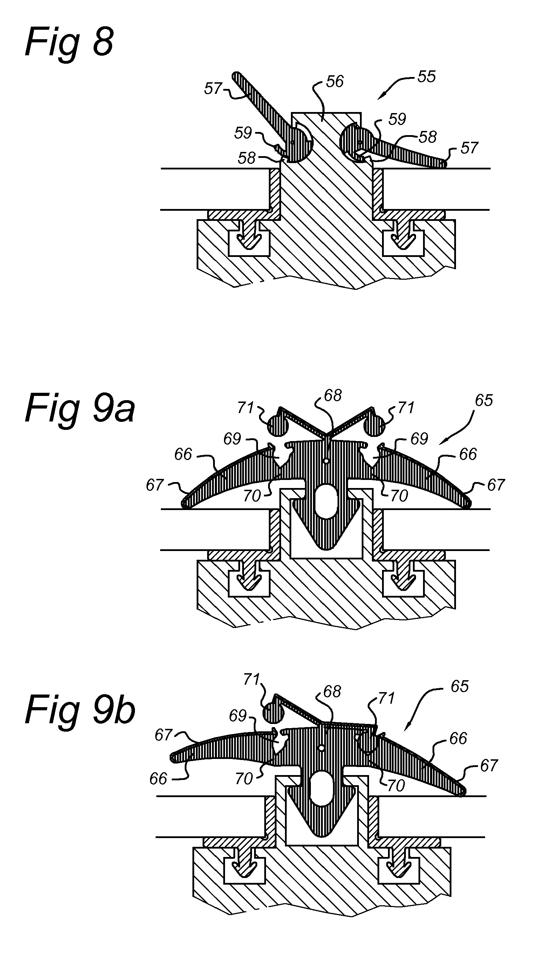

Examples thereof are given in Figs. 8 and 9.

In Fig. 8, the framing section is denoted overall by reference numeral 55. This consists of a rigid part of the ridge structure denoted by reference numeral 56 and two hinged arms 57 made of rubber-like material. The central part is provided with ridges 58 while the hinged arms are provided with resilient locking lips 59.

Figs. 9a and 9b show a further embodiment. The framing section is denoted overall by reference numeral 65 and consists of a seal part 66 which comprises two arms 67 and is snap-fitted into the ridge part. At the connection between the arms 67 and the central part 68, openings 69 are present. At the location of the openings 69, the cross section is reduced to such an extent that the remaining material 70 acts as a film hinge for the arms 67. That is to say that, in the position shown in Fig. 9a, the arms 67 can be displaced relatively easily. This is illustrated in the left-hand part of Fig. 9b in which the left-hand arm (as can be seen in said figure) has been moved upwards in a simple manner in order to introduce a panel which is not shown in more detail.

Two locking bodies 71 are connected to the framing section 65 and are embodied such that they can be introduced into the openings 69. This is shown diagrammatically in the right-hand part of Fig. 9b. As soon as the locking body 71 has been fitted in opening 69, it is no longer readily possible to move the respective arm 67 upwards. Locking is effected in this manner.

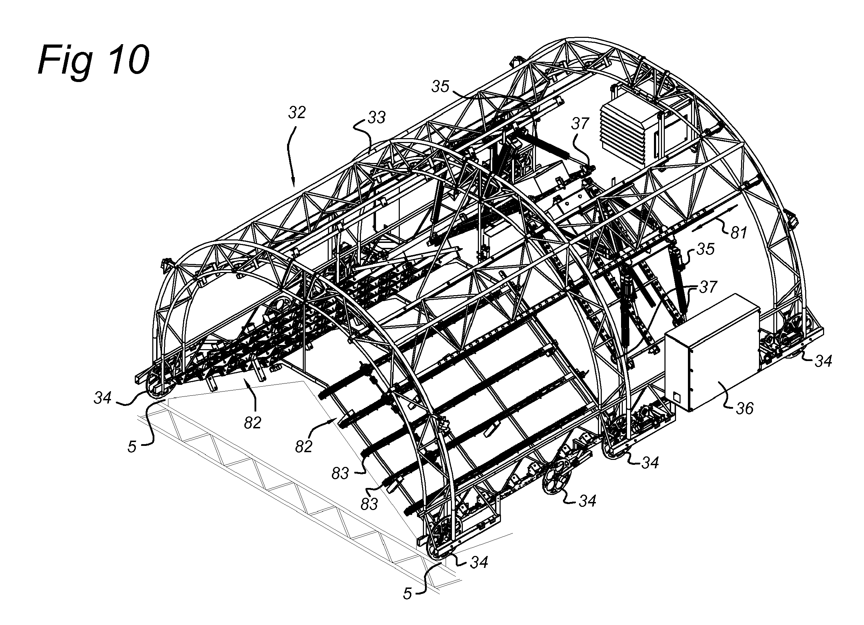

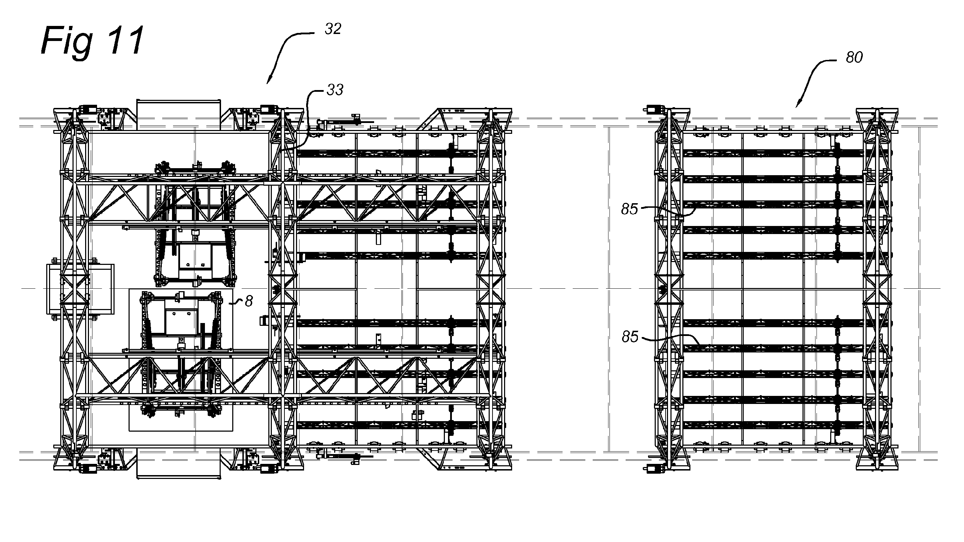

Figs. 10 and 11 show a device, denoted overall by reference numeral 32, by means of which the glass panes can be fitted from the outside. It cooperates with a supply vehicle 80 illustrated in Fig. 11. The fitting device 32 comprises a frame 33 which is provided with a wheel set 34, designed in particular to be moved along the gutters 5 of a greenhouse structure. A number of actuators 35 are present, the ends of which engage with a suction cup structure 37. The displacement of the actuators is controlled by a control unit 36. The suction cup 37 is embodied to grip a glass panel and subsequently handle it. By means of this device, the push-in/tilting operation described by means of the above examples can be carried out. However, it will be understood that the fitting of the panels can also be carried out by means of any other conceivable structure.

The actuators 35 suitable for gripping a glass panel are each attached to a subframe which can move to and fro in the direction of arrow 81. In Figs. 10 and 11, the actuators 35 are shown in the position prior to the fitting of a glass panel 8. However, these actuators, together with the associated suction cup structure 37, can be moved over a conveyor 82 which is fixed to the frame 33 and situated on either side of the roof to be covered. Each conveyor consists of a number of belts 83 for carrying a number of window panes 8.

Supply vehicle 80 is embodied to also carry a number of panels 8. These are also placed on a number of belts 85 which can be moved to and fro.

In practice, after having been loaded with a number of window panes, the supply vehicle will be moved up to the device 32. In this case, the structure is such that the belts 83 and 85 are at such a level with respect to one another that it is possible to transfer one or more panels 8 from the supply vehicle 80 to the glazing device 32. Subsequently, the panels are grasped one by one by the structure with the actuators 35 and the panels are fitted one by one. This fitting can be carried out in a completely automated manner, with the positioning with respect to the gutter, bars and ridge already present in the roof being determined by means of sensors.

By means of the present invention, it is not only possible to construct a greenhouse or similar roof structure quickly and in a mechanized way, but also to carry out repairs in a simple manner. According to the present invention, window panes can be replaced by fitting new panels from the outside. Thus, the activities taking place in the space situated underneath are hardly disrupted, if at all.

After reading the above, those skilled in the art will immediately be able to think of variants which are within the scope of the attached claims and are obvious.

## Claims

1. Method for installing a panel (8) in a greenhouse structure (1), comprising providing a window (4, 5, 6) accommodating the glass panel, installing the panel in said window and fitting a framing covering the edge of said panel, wherein said window is provided with framing sections (11, 15, 25) for fitting said panel, which framing sections are fitted on said window so as to be able to be folded over and are moved into a receiving position (Figs. 5a, 5b; Figs. 6a, 6b; Fig. 7a) for fitting said panel and into a securing position (Fig. 5b; Fig. 6b; Fig. 7b) after said panel has been fitted, **characterized in that** said window comprises four sides, one of said sides (5) is provided with a framing section (9) which is in the securing position, for fitting said panel, wherein said panel is pushed into said one side at an incline and is then displaced by tilting (12) to said other side of said window.

2. Method according to Claim 1, wherein said folding of said framing sections comprises bending over.

3. Method according to one of the preceding claims, wherein said folding of said framing sections comprises resilient turning over.

4. Method according to one of the preceding claims, wherein said panel is provided with a sealing peripheral edge for the purpose of fitting it into the window.

5. Building structure (1) comprising a frame which comprises a number of windows, wherein one of said windows is provided with a translucent panel (8), wherein said window is provided with a framing which secures the panel in the window, which framing comprises framing sections, wherein a framing section (11, 15, 25) is fixedly connected to said window and, in said fixedly connected position, can be displaced between a receiving position (Figs. 5a, 5b; Figs. 6a, 6b; Fig. 7a), in which said panel (8) can be displaced along said framing section without causing damage, and a securing position (Fig. 5c; Fig. 6c; Fig. 7b) in which said panel is clamped against said window, **characterized in that** said framing section (25) comprises a connecting part (40) which is connected to the window, an engagement part (41) which is hingedly connected to said connecting part, which engagement part is connected on its other side to a prestressing part (42).

6. Building structure according to Claim 5, wherein said prestressing part (42) and said connecting part (40) are provided with cooperating locking means (47, 43).

7. Building structure according to Claim 5 or 6, wherein a hinged auxiliary part (44) is provided between said prestressing part (42) and said engagement part (41).

8. Building structure according to Claim 7, wherein said hinged auxiliary part (44) is provided with a lock.

9. Building structure according to one of Claims 6-8, wherein said framing section is embodied as a material part with the window.

10. Building structure according to one of Claims 6-9, wherein said framing section is connected to said window via an attachment part and a line of weakening (23) extends between said framing section and attachment part.

11. Building structure according to one of Claims 6-10, wherein said framing section comprises a carrier part (20) and a sealing part (21).

12. Greenhouse structure comprising a roof (2) with a frame and windows according to one of Claims 6-11.

13. Device (32) for installing a panel (8) in a window, comprising a wheeled arch-shaped frame (33), which frame is provided with engagement means (37) for a panel, which engagement means (37) are connected to the frame via installation means (35), in which said installation means comprise a number of linearly acting actuators (35), wherein a control unit (36) is present for operating said actuators for handling said panel, **characterized in that** said control unit (36) is embodied in such a manner that a panel (8) is, after engagement, brought from a transport position to an installation position (Fig. 2), which installation position comprises tiltably fitting the respective side of the panel against one side (9) of the window, to a fitted position, wherein the displacement from the installation position to the fitted position comprises only a tilting movement.

14. Device according to Claim 13, comprising means for folding framing sections which secure said window.
